# EUROPÄISCHE PATENTSCHRIFT

(11) **EP 1 135 971 B1**
(45) Veröffentlichungstag und Bekanntmachung des Hinweises auf die Patenterteilung: **15.01.2003**
(21) Anmeldenummer: 99973217.5
(22) Anmeldetag: 08.07.1999
(51) Int. Cl.: H05B 7/148, H05B 7/144

(54) **VERFAHREN UND EINRICHTUNG ZUR ERFASSUNG DER NUTZUNGSMINDERUNG VON BAUTEILEN AN LICHTBOGENÖFEN**
METHOD AND DEVICE FOR DETECTING PERFORMANCE DROPS IN THE COMPONENTS OF AN ARC FURNACE
PROCEDE ET DISPOSITIF SERVANT A DETECTER LA DIMINUTION DE PRODUCTIVITE DE COMPOSANTS D'UN FOUR A ARC ELECTRIQUE

(30) Priorität: 30.11.1998 DE 19856765
(43) Veröffentlichungstag der Anmeldung: 26.09.2001
(73) Patentinhaber: SMS Demag AG, 40237 Düsseldorf (DE)
(72) Erfinder: ARLT, Detmar, D-47804 Krefeld (DE); SCHÜRING, Andreas, D-45475 Mülheim (DE)
(74) Vertreter: Meissner, Peter E., Dipl.-Ing.
(86) Internationale Anmeldenummer: DE9902154
(87) Internationale Veröffentlichungsnummer: WO00033616

(56) Entgegenhaltungen:
- DE-A- 2 615 202

## Beschreibung

Die Erfindung betrifft ein Verfahren zur Erfassung der Nutzungsminderung, und zwar der Beschädigung, des Verzehrs und/oder Bruchs, von mit elektrischem Strom beaufschlagbaren oder mit diesem energiemäßig in Verbindung bringbaren Bauteilen an Lichtbogenöfen, bei denen während des Betriebes von der Elektrode ausgehend ein Lichtbogen brennt, und eine entsprechende Einrichtung dazu.

Insbesondere bei geschlossenen Lichtbogenöfen ist der Innenschacht nicht einsehbar, so daß das Bedienungspersonal den Lichtbogen der vom Ofenschacht komplett abgedeckten Elektrode nicht erkennen kann.

Gleiches gilt aber auch für den Bereich der Bodenelektrode an Gleichstromöfen. Hier kann es zu Überschlägen kommen, die eher durch Zufall bzw. erst nach Zerstörung anderer Bauteile erkannt werden.

Bruchsicherungen für Elektroden in Lichtbogenöfen sind allgemein bekannt, so wird beispielsweise in der DE 195 26 161 ein Verfahren vorgeschlagen, bei dem das Gewicht der Elektrode meßtechnisch erfaßt wird und einer eine Bruchsicherung aufweisenden Überwachungseinrichtung zugeführt wird. Als Meßgröße wird das Gewicht der Elektrode benutzt.

Nachteil dieses Verfahrens ist es, daß ein signifikanter Teil der Elektrode abbrechen muß, um vom Meßsystem erfaßt zu werden, und daß darüber hinaus ein Verschleiß der mit der Elektrode korrespondierenden Bauteil des Ofens nicht erkennbar ist. Weiterhin ist die Erfassungsgeschwindigkeit aufgrund der dynamischen Bewegung der Elektrode nicht groß genug.

Für die Bodenelektrode ist dieses Verfahren nicht anwendbar, da diese vom Boden des Gleichstromlichtbogenofens umhüllt wird.

Aus EP 0 556 519 B1 ist ein Walzenbruch-Detektorsystem für einen Walzenherdofen bekannt, bei dem die von einem Lichtprojektionsmittel gelieferten Lichtstrahlen von einem Detektionsmittel erfaßt werden, die so angeordnet sind, daß die Unterbrechung eines oder mehrerer Lichtstrahlen durch eine gebrochene Walze detektiert wird.

Dieses Verfahren läßt sich im Gegensatz zu einem frei einsehbaren Walzenherdofen bei einem Lichtbogenofen nicht anwenden. Dieses bekannte Verfahren braucht eine Lichtquelle als Sender und eine Diode als Empfänger. Bei einem Bruch einer Elektrode könnte zwar Lichtstrahlen im Schacht unterbrochen werden, der sofort brennende Lichtbogen würde aber diese Wirkung zunichte machen.

Weiterhin können Staubpartikel und Temperatur der glühenden Elektrode bei der Messung des hier aufgezeigten Verfahrens zu Fehlem führen. Darüber hinaus wird die Quelle und der Reflektor bei diesem hüttenmännischen Aggregat bei der aggressiven Umgebung mit Staub und Hitze zerstört, mindestens aber unbrauchbar werden.

Die Schrift DE 26 15 202 A offenbart eine Einrichtung und ein Verfahren zur Regelung der Energiezufuhr von Elektroöfen. Im Bereich der Elektroden sind Infrarottaster angeordnet. Mit den Tastern werden Thermogramme von der heißen Außenwandung aufgenommen. Die Thermogramme werden benutzt, um einen Verschleiß der Innenwandung zu ermitteln.

Die Erfindung hat sich das Ziel gesetzt, mit konstruktiv einfachen Mitteln ein Verfahren und eine Einrichtung zu schaffen, schnell und sicher und ohne Signalverfälschungen in Lichtbogenöfen den aktuellen Zustand von Bauteilen, die mit elektrischem Strom beaufschlagt oder mit diesen energiemäßigen in Verbindung bringbar sind, zu erfassen und den Ofenbetrieb entsprechend anzupassen.

Die Erfindung erreicht dieses Ziel durch die kennzeichnenden Merkmale des Anspruchs 1 und die des Anspruchs 4.

Erfindungsgemäß wird der Lichtschein eines Lichtbogens einer Elektrode eines Lichtbogenofens erfaßt. Dieser Lichtbogen kann während des normalen Ofenbetriebes brennen, regelmäßig ist dies der Fall bei der in das Ofengefäß hineinragenden Elektrode, er kann aber auch als Überschläge auftreten, also als nicht gewollter Lichtbogen einer Bodenelektrode.

Die den Lichtschein betreffenden Meßdaten werden vom Meßort aus zu einem in geschützter Lage befindlichen Meß- und Regelgerät geführt und dort verarbeitet. Erfindungsgemäß werden also ausschließlich die Sensorien im unzulänglichen Bereich mit den schlechten Umgebungsbedingungen wie Staub und große Hitze belassen. Die Auswerteelektronik befindet sich in gut zugängigen Bereichen mit vergleichsweise guten Umgebungsbedingungen.

Zeigen sich bei der Bearbeitung in den Meß- und Regelgeräten von einem vorgebbaren Wert Abweichungen, so werden Steuersignale an einen Aktuator gegeben, der Einfluß auf den Betriebszustand des Lichtbogenofens nimmt. Aufgrund der großen Energie, durch die Störlichtbogen in diesem Bereich gekennzeichnet sind, ist ein unmittelbares Erkennen und gegebenenfalls Abschalten zwingend erforderlich.

Aber nicht nur ein schlagartiges Unterbrechen der Zufuhr der elektrischen Energie ist mit dem vorgeschlagenen Verfahren möglich, ein Erfassen des Streulichtes aus dem Arbeitsbereich des Lichtbogens läßt sich auch als Maß bei dem Verschleiß des Feuerfestmaterials verwenden.

Beim erfindungsgemäßen Verfahren wird der Lichtbogen erkannt, und nicht die Beschädigung des Bauteils, die er hervorruft. Durch das schlagartige Abschalten des Ofens wird in den meisten Fällen die Beschädigung verhindert, zumindestens aber deutlich gemindert. Dies gilt auch für geringe Beschädigungen an den Ofenteilen im Falle eines Überschlages, welches ebenfalls durch ein automatisches schnelles Abschalten positiv beeinflußt wird.

In einer vorteilhaften Weiterbildung der Erfindung wird der Lichtschein des Lichtbogens bzw. der Lichtbogenüberschläge an einer Meßstelle über mehrere Meßelemente erfaßt. Regelmäßig reichen hier drei um 120° versetzte Meßelemente aus.

Bei der Erfindung sind zur Signalaufnahme und zur Signalübertragung rein optische Lichtleiter vorgesehen. Die über diese Meßleitungen geführten Signale werden weder bei der Aufnahme noch bei der Übertragung durch von der Elektrode hervorgerufene magnetische Felder verfälscht.

Um den Überwachungsbereich zu vergrößern wird bei einer Weiterbildung der Erfindung der Lichtwellenleiter mit einer Linse versehen. Hierdurch läßt sich der Lichtschein im Meßelement bündeln und der Meß- und Regeleinrichtung zuführen. Hierbei werden Meßleitungen eingesetzt, die in der Lage sind, der Hitze- und Schmutzumgebung im Ofenschacht zu widerstehen.

Um ein Verschmutzen des Lichtwellenleiters bzw. der gegebenenfalls eingesetzten Linsen zu vermeiden, sind Düsen vorgesehen, durch die ein gasförmiges Medium geführt wird. Als Gas ist Luft oder Stickstoff vorgesehen, welches in geringen Mengen mit leichtem Überdruck den Meßaufnahmebereich staubfrei hält.

Sobald ein im Innenschacht des Ofens nicht gewollter Lichtbogen entsteht, wird sein Lichtschein von den Lichtwellenleitern zu einer Auswerteelektronik transportiert. Hier werden diese Signale erfaßt, verarbeitet und es wird unmittelbar auf den Gleichrichter des Ofens zugegriffen und der Strom gemindert und im Bedarfsfall abgestellt.

Die Erfassung des Lichtscheines kann auch für die Überwachung des ebenfalls nicht einsehbaren Feuerfestbereichs im Innenschachtunterteil eines Lichtbogenofens verwendet werden. Hierbei wird die Intensität des Streulichtes aus dem Arbeitsbereich des Lichtbogens von der Auswerteelektronik erfaßt, in seinem Trend langfristig beobachtet und dem Verschleiß der Feuerfeststeine zugeordnet. in diesem Fall wird nicht der Ofen automatisch abgeschaltet, sondern die erfaßten Meßdaten dienen der Bedienungperson als Entscheidungshilfe für planbare Instandsetzungsmaßnahmen.

Ein Beispiel der Erfindung ist in der beigefügten Zeichnung dargelegt. Dabei zeigen die
- Figur 1: Schematisch einen Schnitt durch ein Ofengefäß.
- Figur 2: Einen Schnitt durch eine Meßdüse.

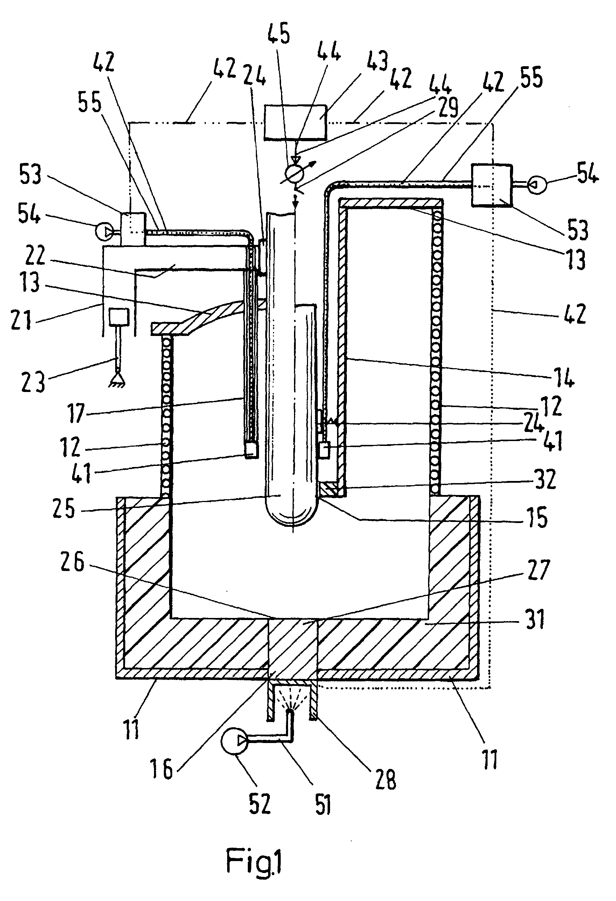

Die Figur 1 zeigt schematisch den Schnitt durch ein Ofengefäß eines Lichtbogenofens mit einem Boden 11, eine Auskleidung des Bodens 31 und einem Ofenschacht 12, der durch einen Deckel 13 verschlossen wird. Im linken Teil der Figur ist ein Lichtbogenofen dargestellt, in dem eine Elektrode 25, welche über eine Elektrodenhalterung 24 an einer Trageinrichtung, bestehend aus Tragsäule 21 und Tragarm 22, befestigt ist und frei in den Ofenschacht 12 hineinragt. Die Tragsäule 21 wird wie üblich von einem Antrieb 23 vertikal bewegt.

Im rechten Teil der Figur 1 ist ein Elektrolichtbogenofen dargestellt, bei dem in den Ofenschacht 12 ein Innenschacht 14 hineinragt, in dem koaxial die Elektrode 25 angeordnet ist, welche mit ihrer Spitze durch einen Durchtritt 15, welcher zwischen einer Feuerfestauskleidung 32 am Innenschacht 14 der Elektrode 25 vorhanden ist, in den Außenschacht 12 des Lichtbogenofens hineinragt.

Im Boden 11 des Ofengefäßes ist eine Bodenöffnung 16 vorgesehen, durch die eine Elektrode 26, welche aus einem zylindrischen Teil 27 und einem Kühlteil 28 besteht, in den Ofen hineinragt.

Der Kühlteil 28 der Bodenelektrode 26 ist mit einer Kühlmedienzufuhr 51 verbunden, an die eine Pumpe 52 angeschlossen ist.
Außerhalb des Ofengefäßes ist ein Meß- und Regelgerät 43 angeordnet, welches über Meßleitungen 42 mit Meßelementen 41, die sowohl in der Nähe der Elektrode 25 wie auch der Bodenelektrode 26 angeordnet sind, verbunden.

Im linken Teil der Figur ist die Meßleitung 42 zusammen mit einer Gasleitung 55 durch ein Schutzrohr 17 zu dem Meßelement 41 bis nahe an die Deckelführung der Elektrode 25 geführt. Im rechten Teil der Figur wird die Meßleitung 42 zusammen mit der Gasleitung 55 in den Freiraum zwischen dem Innenschacht 14 und der Elektrode 25 bis zu deren Kopfende geführt, und zwar bis unterhalb der Elektrodenhalterung 24,

Unterhalb des Ofens wird die Meßleitung 42 zusammen mit der Gasleitung 55 bis in die Nähe der Bodenelektroden geführt. Dort befindet sich das Meßelement 41.

Die Gasleitungen 55 sind an einer Gasförderstation 53 angeschlossen, die mit einer Pumpe 54 in Verbindung stehen.

Das Meß- und Regelgerät 43 ist weiterhin mit einer Steuerleitung 44 verbunden, welche an einen Aktuator 45 angeschlossen ist.

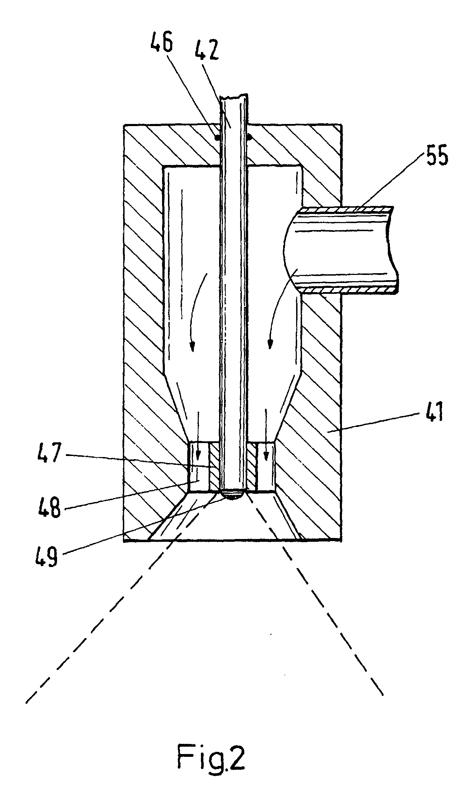

Die Figur 2 zeigt im Detail ein Meßelement 41, welches eine topfförmige Gestalt besitzt, an dessen offenen Ende eine Linse 49 angeordnet ist, welche an die Meßleitung 42 angeschlossen ist.

Die Meßleitung 42 ist bei ihrem Durchtritt durch den Mantel des Meßelementes 41 über eine Dichtung 46 abgedichtet und kopfendig durch eine Halterung 47 gehalten. Die Halterung 47 ist zum Gehäuse des Meßelementes 41, eine Düse 48 bildend, distanziert. Der Innenraum des topfförmigen Meßelementes 41 ist über die Gasleitung 55 mit der Gasversorgungsstation 53 (hier nicht weiter dargestellt) verbunden.

Die in der Figur 2 dargestellten Pfeile zeigen die Strömungsrichtung des gasförmigen Mediums, welches zur Reinhaltung der Linse und zur Kühlung des Meßelementes dient. Die im Bereich der Linse dargestellte gestrichelte Linie zeigt den Arbeitsbereich der Linse bzw. des Lichtleiters.

### Positionsliste

### Lichtbogenofen

- 11: Ofengefäß
- 12: Außenschacht des Ofengefäßes
- 13: Deckel
- 14: Innenschacht des Ofengefäßes
- 15: Durchtritt
- 16: Bodenöffnung
- 17: Schutzrohr

### Elektrik

- 21: Trageinrichtung Tragsäule
- 22: Trageinrichtung Tragarm
- 23: Antrieb
- 24: Elektrodenhalterung
- 25: (Schacht-) Elektrode
- 26: (Boden-) Elektrode
- 27: Zylindrischer Teil
- 28: Kühlteil
- 29: Schalter

### Feuerfesteinrichtung

- 31: Auskleidung Boden
- 32: Auskleidung Innenschacht

### Meß- und Regeleinrichtung

- 41: Meßelement
- 42: Meßleitung
- 43: Meß- und Regelgerät
- 44: Steuerleitung
- 45: Aktuator
- 46: Dichtung
- 47: Halterung
- 48: Düse
- 49: Linse

### Kühlung

- 51: Kühlmedienzufuhr Bodenelektrode
- 52: Pumpe Wasser
- 53: Gasförderstation
- 54: Pumpe Gas
- 55: Gasleitung

## Patentansprüche

1. Verfahren zur Erfassung der Nutzungsminderung von mit elektrischem Strom beaufschlagbaren oder mit diesem energiemäßig in Verbindung bringbaren Bauteilen an Lichtbogenöfen, bei denen während des Betriebes von einer Elektrode (25) ausgehend ein Lichtbogen brennt,
**gekennzeichnet durch** folgende Schritte:
a) es wird in der Nähe des Lichtbogens dessen Lichtschein erfaßt,
b) die den Lichtschein betreffenden Meßdaten werden vom Meßort aus zu einem in geschützter Lage befindlichen Meß- und Regelgerät (43) geführt und dort verarbeitet,
c) bei Abweichungen von einem vorgebbaren Wert werden Steuersignale an einen Aktuator (45) gegeben, der Einfluß auf den Betriebszustand des Lichtbogenofens nimmt und hierbei insbesondere die Zufuhr der elektrischen Energie schlagartig unterbricht.

2. Verfahren nach Anspruch 1,
**dadurch gekennzeichnet,**
**daß** der Lichtschein an einer Meßstelle über mehrere, vorzugsweise drei gleichmäßig verteilte Meßelemente (41) erfaßt wird.

3. Verfahren nach Anspruch 2 oder 1,
**dadurch gekennzeichnet,**
**daß** der Lichtschein im Meßelement gebündelt wird.

4. Einrichtung zur Erfassung des Verzehrs und/oder Bruchs von mit elektrischem Strom beaufschlagbaren oder mit diesem energiemäßig in Verbindung bringbaren Bauteilen an ein mit einem Deckel verschließbaren Ofengefäß aufweisenden Lichtbogenöfen, zur Durchführung des Verfahrens nach Anspruch 1,
**dadurch gekennzeichnet,**
**daß** Meßelemente (41) zur Erfassung des Lichtscheins, insbesondere des UV- oder Infrarotlichtes vorgesehen sind,
**daß** diese Meßelemente (41) über Meßleitungen (42) meßtechnisch mit einem Meßund Regelgerät (43) verbunden sind, und
**daß** das Meß- und Regelgerät (43) über Steuerleitungen (44) mit einem Aktuator (45) verknüpft ist, der Einfluß auf den Betriebszustand des Lichtbogenofens nimmt

5. Einrichtung nach Anspruch 4,
**dadurch gekennzeichnet,**
**daß** bei einem eine in einem Innenschacht (14) angeordnete Elektrode (25) aufweisenden Lichtbogenofen die Meßelemente (41) in der Nähe des Durchtritts (15) angeordnet sind, bei dem die Elektrode (25) durch die Mündung des Innenschachtes (14) geführt wird.

6. Einrichtung nach Anspruch 4,
**dadurch gekennzeichnet,**
**daß** bei einem eine Bodenelektrode (26) aufweisenden Gleichstromlichtbogenofens die Meßelemente (41) außerhalb des Ofengefäßes (11) in der Nähe des Durchtritts (15) der Bodenelektrode (26) durch den Mantel des Ofengefäßes (11) angeordnet sind.

7. Einrichtung nach Anspruch 4,
**dadurch gekennzeichnet,**
**daß** bei einem eine von einem Tragarm (22) gehaltene in das Ofengefäß (11) hineinragende Elektrode (25) aufweisenden Lichtbogenofen die Meßelemente (41) in koaxial zur Elektrode (25) geführten Schutzrohren (17) angeordnet sind, welche am Tragarm (22) befestigt sind.

8. Einrichtung nach einem der Ansprüche 5 bis 7,
**dadurch gekennzeichnet,**
**daß** mindestens drei Meßelemente (41) je Meßort vorgesehen sind.

9. Einrichtung nach Anspruch 8 oder 1,
**dadurch gekennzeichnet,**
**daß** die Meßelemente (41) als Hülse ausgestaltet sind, die zum Erfassungsort des Lichtscheins hin eine Linse (49) aufweisen, und die einen Durchtritt für die Meßleitung (41) besitzen.

10. Einrichtung nach Anspruch 9,
**dadurch gekennzeichnet,**
**daß** die Meßleitung (41) ein Glasfaserkabel ist.

11. Einrichtung nach Anspruch 9 oder 8,
**dadurch gekennzeichnet,**
**daß** im Bereich der Linse (49) eine Düse (48) vorgesehen ist, durch die ein gasförmiges Medium führbar ist.

12. Einrichtung nach Anspruch 11,
**dadurch gekennzeichnet,**
**daß** das Meßelement (41) mit einer Versorgungsstation (53) für gasförmige Medien, z.B. Luft oder Stickstoff verbunden ist.

13. Einrichtung nach Anspruch 4,
**dadurch gekennzeichnet,**
**daß** der Aktuator (45) steuerungsmäßig mit einem in der Stromzuführung der elektrischen Energie zum Uchtbogenofen vorgesehenen Schalter (29) verbunden ist.

## Claims

1. Method of determining the performance drop of components, which are capable of being actuated by electric current or being brought into contact with electricity for energy, of arc furnaces, wherein during operation an arc burns from one electrode (25),
**characterised by** the following steps:
a) the brightness of the arc is determined in the vicinity of the said arc
b) the measurement data about the brightness are passed from the measuring site to a measuring and control device (43) located in a protected position and are processed there,
c) if there are deviations from a specifiable value, control signals are sent to an actuator (45), which acts on the operating state of the arc furnace and in this case abruptly interrupts in particular the supply of electricity.

2. Method according to claim 1, **characterised in that** the brightness is determined at a measuring position via a plurality of, preferably three, evenly distributed measuring elements (41).

3. Method according to claim 2 or 1, **characterised in that** the brightness is bundled in the measuring element.

4. Device for determining the consumption and/or interruption of components actuatable with electric current or capable of being brought into contact therewith, of an arc furnace having a furnace vessel closable with a lid for carrying out the method according to claim 1, **characterised in that** measuring elements (41) are provided for determining the brightness, in particular the UV or infrared light, **in that** these measuring elements (41) are connected by measuring technology via measuring lines (42) to a measuring and control device (43), and **in that** the measuring and control device (43) is linked via control lines (44) to an actuator (45), which acts on the operating state of the arc furnace.

5. Device according to claim 4, **characterised in that** in the case of an arc furnace having an electrode (25) disposed in an inner shaft (14), the measuring elements (41) are disposed in the vicinity of the passage (15) in which the electrode is guided through the aperture of the inner shaft (14).

6. Device according to claim 4, **characterised in that** in the case of a dc arc furnace having a bottom electrode (26), the measuring elements (41) are disposed outside the furnace vessel (11) in the vicinity of the passage (15) of the bottom electrode (26) through the casing of the furnace vessel (11).

7. Device according to claim 4, **characterised in that** in the case of an arc furnace having an electrode (25) held by a carrying arm (22) and projecting into the furnace vessel (11), the measuring elements (41) are disposed in protective pipes (17) guided coaxial to the electrode (25) and fixed to the carrying arm (22).

8. Device according to one of claims 5 to 7, **characterised in that** at least three measuring elements (41) are provided per measuring site.

9. Device according to claim 8 or 1, **characterised in that** the measuring elements (41) are formed as sleeves, which have towards the site of detection of brightness a lens (49), and which have a passage for the measuring line (41).

10. Device according to claim 9, **characterised in that** the measuring line (41) is a fibreoptic cable.

11. Device according to claim 9 or 8, **characterised in that** in the region of the lens (49) a nozzle (48) is provided, through which a gaseous medium can be conducted.

12. Device according to claim 11, **characterised in that** the measuring element (41) is connected to a supply station (53) for gaseous media, e.g. air or nitrogen.

13. Device according to claim 4, **characterised in that** the actuator (45) is connected for control to a switch (29) provided in the current supply of the electric power to the arc furnace.

## Revendications

1. Procédé pour détecter la diminution de rendement de pièces pouvant être alimentées par du courant électrique ou pouvant être mises en liaison, de façon énergétique, avec celui-ci, dans des fours à arc électrique, où, pendant le fonctionnement, un arc électrique brûle à partir d'une électrode (25),
**caractérisé par** les étapes suivantes :
a) à proximité de l'arc électrique, sa lueur est détectée,
b) les données de mesure concernant la lueur sont amenées, à partir du lieu de mesure, vers un appareil de mesure et de réglage se trouvant dans une position protégée (43) et y sont là traitées,
c) lors d'écarts d'une valeur pouvant être prédéfinie, des signaux de commande sont fournis à un actionneur (45) qui influence l'état de fonctionnement du four à arc électrique et, dans ce cas, interrompt brusquement en particulier l'amenée de l'énergie électrique.

2. Procédé selon la revendication 1,
**caractérisé en ce que** la lueur est détectée en un endroit de mesure par l'intermédiaire de plusieurs, avantageusement trois, éléments de mesure (41) uniformément répartis.

3. Procédé selon la revendication 2 ou 1,
**caractérisé en ce que** la lueur est concentrée dans l'élément de mesure.

4. Dispositif pour détecter la consommation et/ou la casse de pièces pouvant être alimentées en courant électrique ou pouvant être mises en liaison, de façon énergétique, avec celui-ci, dans des fours à arc électrique présentant un récipient de four pouvant être fermé par un couvercle, pour la mise en oeuvre du procédé selon la revendication 1,
**caractérisé en ce que** des éléments de mesure (41) pour détecter la lueur, en particulier la lumière UV ou infrarouge, sont prévus, **en ce que** ces éléments de mesure (41) sont reliés à un appareil de mesure et de réglage (43) par des liaisons de mesure (42), et **en ce que** l'appareil de mesure et de réglage (43) est relié, par l'intermédiaire de liaisons de commande (44), à un actionneur (45) qui influence l'état de fonctionnement du four à arc électrique.

5. Dispositif selon la revendication 4,
**caractérisé en ce que**, dans le cas d'un four à arc électrique présentant une électrode (25) agencée dans une cuve interne (14), les éléments de mesure (41) sont agencés à proximité du passage (15), l'électrode (25) étant guidée à travers l'embouchure de la cuve interne (14).

6. Dispositif selon la revendication 4,
**caractérisé en ce que**, dans le cas d'un four à arc électrique à courant continu présentant une électrode de fond (26), les éléments de mesure (41) sont agencés à l'extérieur du récipient de four (11) à proximité du passage (15) de l'électrode de fond (26) à travers l'enveloppe du récipient de four (11).

7. Dispositif selon la revendication 4,
**caractérisé en ce que**, dans le cas d'un four à arc électrique présentant une électrode (25) pénétrant dans le récipient de four (11) et maintenue par un bras de support (22), les éléments de mesure (41) sont agencés dans des tubes de protection (17) guidés de façon coaxiale par rapport à l'électrode (25), qui sont fixés au bras de support (22).

8. Dispositif selon une des revendications 5 à 7,
**caractérisé en ce qu'**au moins trois éléments de mesure (41) sont prévus à chaque endroit de mesure.

9. Dispositif selon la revendication 8 ou 1,
**caractérisé en ce que** les éléments de mesure (41) sont réalisés comme manchon, qui présentent, vers le lieu de détection de la lueur, une lentille (49), et qui possèdent un passage pour la liaison de mesure (42).

10. Dispositif selon la revendication 9,
**caractérisé en ce que** la liaison de mesure (42) est un câble à fibres de verre.

11. Dispositif selon la revendication 9 ou 8,
**caractérisé en ce que**, dans la zone de la lentille (49), il est prévu une buse (48) à travers laquelle un agent gazeux peut être guidé.

12. Dispositif selon la revendication 11,
**caractérisé en ce que** l'élément de mesure (41) est relié à un poste d'alimentation (53) pour des agents gazeux, par exemple de l'air ou de l'azote.

13. Dispositif selon la revendication 4,
**caractérisé en ce que** l'actionneur (45) est relié, pour commande, à un commutateur (29) prévu dans l'amenée de courant de l'énergie électrique vers le four à arc électrique.
